# EUROPEAN PATENT SPECIFICATION

(11) **EP 2 648 447 B1**
(45) Date of publication and mention of the grant of the patent: **15.06.2016**
(21) Application number: 12734083.4
(22) Date of filing: 09.01.2012
(51) Int. Cl.: H04W 24/10, H04W 64/00

(54) **MEASUREMENT GAP CONFIGURATION METHOD AND COMMUNICATION DEVICE**
MESSLÜCKENKONFIGURATIONSVERFAHREN UND KOMMUNIKATIONSVORRICHTUNG
PROCÉDÉ DE CONFIGURATION D'INTERVALLE DE MESURE ET DISPOSITIF DE COMMUNICATION

(30) Priority: 10.01.2011 CN 201110004191
(43) Date of publication of application: 09.10.2013
(73) Proprietor: Huawei Technologies Co., Ltd., Longgang District Shenzhen, Guangdong 518129 (CN)
(72) Inventor: WANG, Fan, Guangdong 518129 (CN); GUO, Yi, Guangdong 518129 (CN)
(74) Representative: Goddar, Heinz J.
(86) International application number: PCT/CN2012/070145
(87) International publication number: WO 2012/094973

(56) References cited:
- EP-A1- 2 252 109
- CN-A- 101 562 833
- CN-A- 101 730 135
- CN-A- 101 873 646
- ERICSSON ET AL: "measurement gap configuration for inter-freq RSTD measurement", 3GPP DRAFT; R2-106464 INTER-FREQ RSTD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467156, [retrieved on 2010-11-09]
- ERICSSON ET AL: "Inter-frequency measurements for OTDOA positioning", 3GPP DRAFT; R4-100874 INTER-FREQUENCY MEASUREMENTS FOR OTDOA POSITIONING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. San Francisco, USA; 20100222, 1 March 2010 (2010-03-01), XP050426280, [retrieved on 2010-03-01]
- TSG RAN WG 1: "LS on assistance information for OTDOA positioning support for LTE", 3GPP DRAFT; R1-093729 LS ON ASSISTANCE INFORMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20090824 - 20090828, 28 August 2009 (2009-08-28), XP050597706, [retrieved on 2009-08-28]
- HUAWEI: "Discussion on positioning assistant information for OTDOA", 3GPP DRAFT; R2-095698, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390205, [retrieved on 2009-10-06]
- HUAWEI ET AL: "Remaining issues when UE performs inter-frequency RSTD measurement", 3GPP DRAFT; R4-110177, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Austin; 20110117, 12 January 2011 (2011-01-12), XP050500403, [retrieved on 2011-01-12]
- CATT (EMAIL DISCUSSION RAPPORTEUR): "Summary of [72b#25]: Measurement gap request procedure for OTDOA", 3GPP DRAFT; R2-111144, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493705, [retrieved on 2011-02-15]
- QUALCOMM INCORPORATED: "Signalling for OTDOA measurement gaps", 3GPP DRAFT; R2-110984, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493658, [retrieved on 2011-02-15]
- HUAWEI: 'Remaining issues when UE performs inter-frequency RSTD measurement' 3GPP TSG RAN WG4 (RADIO) #57 AH, R4-110177 17 January 2011, AUSTIN, US, page 3, XP050500403

## Description

### FIELD OF THE INVENTION

The present invention relates to the field of radio communication technologies, and in particular, to a measurement gap configuration method and a communication apparatus.

### BACKGROUND OF THE INVENTION

OTDOA (Observed Time Difference Of Arrival, observed time difference of arrival) is a common positioning technology, in which a terminal measures the RSTDs (Reference Signal Time Difference, reference signal time difference) between PRSs (Positioning Reference Signal, positioning reference signal) sent by three or more different base stations to obtain the differences between distances from different base stations to the terminal, so as to achieve the purpose of positioning.

In the positioning process, when the terminal performs inter-frequency measurement, the terminal needs to obtain positioning assistance data from the positioning center, and obtain gap configuration information from the base station of the serving cell. The positioning assistance data includes an identifier of a measured cell (or also known as an inter-frequency cell engaged in the positioning) and PRS information of the measured cell. The PRS information includes I-PRS (index of positioning reference signal) and n-PRS (length of a positioning occasion). The terminal determines the positioning occasion (occasion) of the measured cell according to the PRS information. The gap configuration information includes a gap pattern (gap pattern) and a gap offset (gapOffset). The terminal determines the measurement gap of inter-frequency measurement according to the gap configuration information. To enable the terminal to detect the PRS of a measured cell in the measurement gap, namely, to enable the measurement gap to cover the positioning occasion, the base station needs to configure correct gap configuration information.

3GPP document R2-106464 teaches enabling the eNB to configure the required gap pattern for the UE to perform the inter-frequency RSTD measurement, the UE indicates to the eNB via RRC when requested to perform inter-frequency RSTD measurement by e-SMLC in LPP.

3GPP document R4-100874 teaches that only those cells on frequency f2 are considered for inter-frequency RSTD measurements whose positioning occasions are sufficiently aligned with the inter-frequency measurement gaps. Document R4-100874 further discloses that when measurement gaps occur more often than positioning occasions, the UE is informed with the assistance data about the periodicity of positioning occasions in each cell to be measured, which makes it possible and is sufficient for the UE to realize in which of the measurement gaps it can perform inter-frequency positioning measurement.

3GPP document R1-093729 discloses assistance information for the UE that would be necessary for performing OTDOA positioning from a RANI persepctive. The assistance information refers to assistance information that associates with the configuration of the serving cell and the measured cells.

3GPP document R2-095698 discloses that for the assistant information for OTDOA positioning, the Timing offset field value range is between -15360 and 15360, and the maximum allocation period is 32 radio frames when positioning subframes are based on MBSFN subframes.

In the prior art, if the gap offset is configured improperly, the terminal may fail to detect the PRS of the measured cell in the measurement gap, and the PRS detection performance is affected.

### SUMMARY OF THE INVENTION

The present invention provides measurement gap configuration methods and communication apparatus to improve the PRS detection performance. In particular, the present invention provides the technical solutions as defined in the independent claims.

The benefits brought by the technical solutions of the present invention are as follows: The gap offset is determined according to the PRS information of the cell engaged in the positioning, so that the probability that the terminal detects, within a measurement gap, the PRS of the cell engaged in the positioning is improved, and PRS detection performance is improved.

### BRIEF DESCRIPTION OF THE DRAWINGS

To make the technical solutions in the embodiments of the present invention or in the prior art clearer, the accompanying drawings used in the description of the embodiments or the prior art are briefly described hereunder. Apparently, the accompanying drawings illustrate some embodiments of the present invention, and persons of ordinary skill in the art can derive other drawings from such accompanying drawings without making any creative effort.

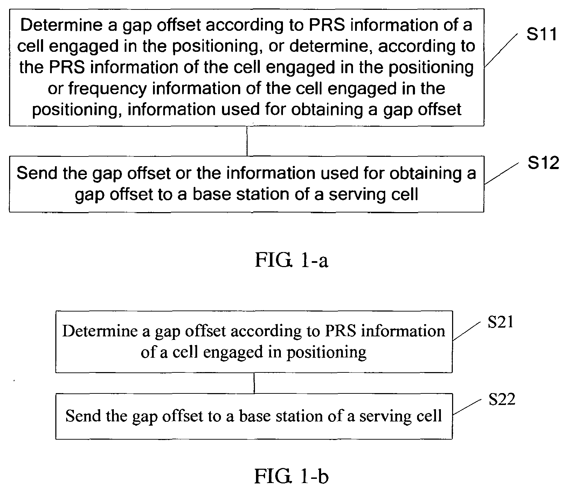

FIG. 1-a is a flowchart of a measurement gap configuration method according to an embodiment of the present invention;
FIG. 1-b is a flowchart of another measurement gap configuration method according to an embodiment of the present invention;
FIG. 2 is a flowchart of another measurement gap configuration method according to an embodiment of the present invention;
FIG. 3 is a schematic position diagram of positioning occasions and measurement gaps according to an embodiment of the present invention;
FIG. 4 is a flowchart of another measurement gap configuration method according to an embodiment of the present invention;
FIG. 5 is a flowchart of another measurement gap configuration method according to an embodiment of the present invention;
FIG. 6 is a flowchart of another measurement gap configuration method according to an embodiment of the present invention;
FIG. 7 is a flowchart of another measurement gap configuration method according to an embodiment of the present invention;
FIG. 8 is a flowchart of another measurement gap configuration method according to an embodiment of the present invention;
FIG 9 is a flowchart of another measurement gap configuration method according to an embodiment of the present invention;
FIG. 10 is a flowchart of another measurement gap configuration method according to an embodiment of the present invention;
FIG 11-a is a schematic structural diagram of a communication apparatus according to an embodiment of the present invention;

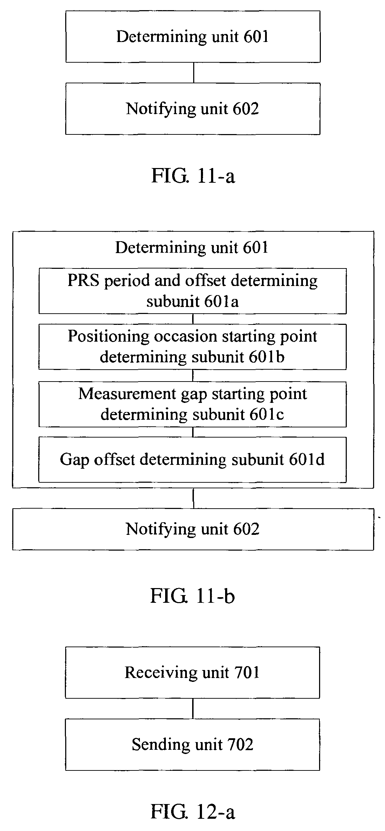

FIG 11-b is a schematic structural diagram of another communication apparatus according to an embodiment of the present invention;

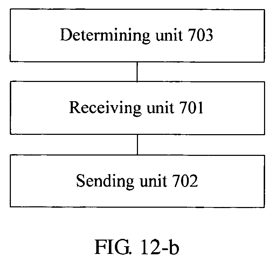

FIG 12-a is a schematic structural diagram of a communication apparatus according to an embodiment of the present invention; and
FIG. 12-b is a schematic structural diagram of another communication apparatus according to an embodiment of the present invention.

### DETAILED DESCRIPTION OF THE EMBODIMENTS

To make the technical solutions, objectives, and advantages of the present invention clearer, the following describes the embodiments of the present invention in detail with reference to accompanying drawings.

As shown in FIG. 1-a, an embodiment of the present invention provides a measurement gap configuration method. The configuration method may be executed by a terminal or a positioning center, and includes the following steps:
S 11. Determine a gap offset according to PRS information of a cell engaged in the positioning, or determine information used for obtaining a gap offset according to PRS information of the cell engaged in positioning or frequency information of the cell engaged in the positioning.
S12. Send the gap offset or the information used for obtaining a gap offset to a base station of a serving cell.

In this embodiment, through the solution of determining the gap offset according to the PRS information of the cell engaged in the positioning, the probability that the terminal detects, within a measurement gap, the PRS of the cell engaged in the positioning is improved, and PRS detection performance is improved.

As shown in FIG. 1-b, an embodiment of the present invention provides another measurement gap configuration method. The configuration method may be executed by a terminal or a positioning center, and includes the following steps:
S21. Determine a gap offset according to PRS information of a cell engaged in positioning.
   In inter-frequency measurement, the cell engaged in the positioning refers to an inter-frequency cell engaged in the positioning, or is also known as a measured cell.
S22. Send the gap offset to a base station of a serving cell.

The gap offset is also used for indicating to the base station that the terminal needs to perform inter-frequency measurement.

In this embodiment, the gap offset is determined according to the PRS information of the cell engaged in the positioning, and is notified to the base station of the serving cell. In this solution, the gap offset is configured according to the PRS of the cell engaged in the positioning, so that the probability that the terminal detects, within a measurement gap, the PRS of the cell engaged in the positioning is improved, and PRS detection performance is improved.

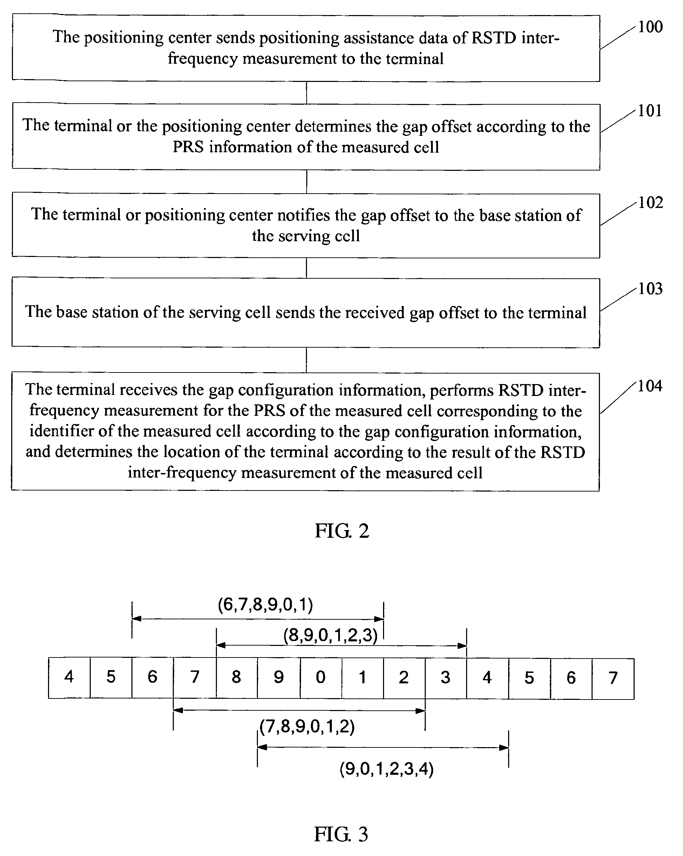

As shown in FIG. 2, an embodiment of the present invention provides another measurement gap configuration method. In this method, a positioning center or a terminal sends a determined gap offset to a base station, and the method includes the following steps:
100. The positioning center sends positioning assistance data of RSTD inter-frequency measurement to the terminal.
   The RSTD inter-frequency measurement refers to RSTD measurement performed by the terminal for a measured cell whose frequency is different from the frequency of a serving cell. The positioning assistance data of the RSTD inter-frequency measurement includes an identifier of the measured cell and PRS information of the measured cell. The PRS information includes I-PRS (index of positioning reference signal) and n-PRS (length of positioning occasion). For example, the value of n-PRS may be 1, 2, 4, or 6.
101. The terminal or the positioning center determines the gap offset according to the PRS information of the measured cell.

This step may include the following steps:
101a. Determine a PRS period and a PRS offset that are corresponding to the I-PRS.
For example, the PRS period and the PRS offset that are corresponding to the I-PRS may be determined according to the PRS subframe configuration table (Positioning reference signal subframe configuration) shown in Table 1.

**Table 1**

| I-PRS (Unit: Subframe) | PRS Period (Unit: Subframe) | PRS offset (Unit: Subframe) |
|---|---|---|
| 0 - 159 | 160 | I-PRS |
| 160 - 479 | 320 | I-PRS-160 |
| 480 - 1119 | 640 | I-PRS-480 |
| 1120 - 2399 | 1280 | I-PRS-1120 |
| 2400 - 4095 | Reserved (reserved) | |

101b. Determine a starting point of a positioning occasion (occasion) according to the PRS period and the PRS offset.
The system frame number (SFN) of the positioning occasion at the starting point of a first PRS period is: SFN=FLOOR (PRS offset/10). The subframe number at the starting point is: subframe=PRS offset mod 10. The difference between the system frame number at the starting point of the first PRS period and the system frame number of the positioning occasion at the starting point of another PRS period is the number of subframes included in the other PRS period. The subframe number of the positioning occasion at the starting point of another PRS period is the same as that at the starting point of the first PRS period. For example, when the I-PRS is 1 subframe, the PRS offset is 1 subframe, the PRS period is 160 subframes, and the starting points of the positioning occasion fall on the following subframes: (system frame number 0, subframe number 1), (system frame number 16, subframe number 1), (system frame number 32, subframe number 1)...and so on.
101c. Determine the starting point of a measurement gap according to the starting point of the positioning occasion, the length of the positioning occasion (n-PRS), and the preset number of consecutive subframes in the measurement gap.
The range of the positioning occasion is determined according to the starting point of the positioning occasion and the length of the positioning occasion (n-PRS); the range of the measurement gap is determined according to a preset coverage rule and the number of consecutive subframes in the measurement gap, and the starting point of the range of the measurement gap is served as the starting point of the measurement gap. The coverage rule is: The positioning occasion is within the consecutive range of the measurement gap, or the positioning occasion, a subframe reserved before the positioning occasion, and a subframe reserved after the positioning occasion are within the consecutive range of the measurement gap, so as to reserve the handover time of inter-frequency measurement, for example, the handover time of the inter-frequency measurement is less than 0.5 ms.
The preset number of consecutive subframes in the measurement gap may be 6. For example, in an LTE system, a subframe includes 2 slots (slot), each slot lasts 0.5 ms (millisecond), and a subframe lasts 1 ms.
101d. Determine the gap offset according to the starting point of the measurement gap.

The gap offset is determined according to the correspondence between the starting point of the measurement gap and the gap offset (gapOffset). The correspondence between the starting point of the measurement gap and the gap offset (gapOffset) is:
SFN mod T = FLOOR(gapOffset/10);
subframe = gapOffset mod 10.

In the equations above, SFN is the system frame number at the starting point of the measurement gap, subframe is the subframe number at the starting point of the measurement gap, mod represents a modulo operation, FLOOR represents rounding down, and T = MGRP/10. MGRP (Measurement Gap Repetition Period, measurement gap repetition period) represents the measurement gap repetition period corresponding to the gap pattern. For example, the MGRP corresponding to gap patterns 0 and 1 is 40 ms and 80 ms, respectively.

In addition, in practical applications, the gap offset may be specifically indicated by 5 bits (bit). The 5 bits represent a maximum range which is from 0 to 31 subframes. Because the period of the measurement gap is 30 subframes, the range of the offset for detecting may include 0 to 29, with 30 and 31 being reserved.

The following takes examples to describe how to determine the gap offset. It is assumed that I-PRS = 10 and n-PRS = 1 in the measured cell. The terminal or positioning center determines that the PRS period corresponding to I-PRS = 10 is 160 subframes, and that the PRS offset is 10 subframes. Therefore, the system frame number at the starting point of the positioning occasion is 1, and the subframe number at the starting point of the positioning occasion is 0. Moreover, it is known that the length of the positioning occasion is n-PRS = 1 subframe. Therefore, the location of the positioning occasion is indicated by subframe number 0 in FIG. 3. Considering a scenario in which the measurement gap needs to cover the positioning occasion, a subframe reserved before the positioning occasion, and a subframe reserved after the positioning occasion, the coverage range of the measurement gap comes in 4 cases in total. As indicated by the subframe number, the coverage range of the measurement gap is (6, 7, 8, 9, 0, 1), (7, 8, 9, 0, 1, 2), (8, 9, 0, 1, 2, 3), and (9, 0, 1, 2, 3, 4). The system frame number at the starting point of the corresponding measurement gap is 0, and the subframe numbers are 6, 7, 8, and 9. According to the correspondence between the starting point of the measurement gap and the gap offset, the value of the gap offset may be 6, 7, 8, or 9. When the PRS information of the measured cell changes, for example, I-PRS = 20, namely, the PRS period is 160 ms and the PRS offset is 20, the gap offset may be 16, 17, 18, or 19, and then, the terminal or the positioning center should notify the base station of an updated gap offset, so that the base station configures correct gapOffset for the terminal and the terminal detects the PRS within the measurement gap, thereby improving the PRS detection performance.

102. The terminal or positioning center notifies the gap offset to the base station of the serving cell.

Preferably, the terminal or positioning center notifies one gap offset to the base station. In addition, the terminal or positioning center may notify multiple gap offsets to the base station, and the base station selects one from them.

When the base station of the serving cell receives the gap offset notified by the terminal or positioning center, the base station of the serving cell determines that the terminal needs to perform RSTD inter-frequency measurement. Alternatively, in this embodiment, a notification may be used to indicate that the terminal needs to perform RSTD inter-frequency measurement. In this case, the gap offset and the notification may be sent to the base station concurrently. After the base station of the serving cell receives the gap offset notified by the terminal or positioning center, this embodiment may further include the following steps:
103. The base station of the serving cell sends the received gap offset to the terminal.

The base station of the serving cell may send gap configuration information of RSTD inter-frequency measurement to the terminal. The gap configuration information includes a gap pattern and the received gap offset.

For example, the LTE Release 9 specifies that the terminal uses gap pattern 0 to perform RSTD inter-frequency measurement. Therefore, in this embodiment, the base station may also configure the gap pattern in the gap configuration information as gap pattern 0.

The base station of the serving cell sends the received gap offset to the terminal. Because the terminal performs RSTD inter-frequency measurement according to gap configuration information delivered by the base station of the serving cell, the gap offset in the gap configuration information delivered by the base station in this embodiment is determined by referring to the gap offset reported by the terminal.

104. The terminal receives the gap configuration information, performs RSTD inter-frequency measurement on the PRS of the measured cell corresponding to the identifier of the measured cell according to the gap configuration information, and determines the location of the terminal according to the result of the RSTD inter-frequency measurement of the measured cell.

This step is a conventional technical means in the OTDOA positioning technology, and its implementation process is described herein briefly: The terminal calculates the starting point of the measurement gap according to the gap offset in the gap configuration information, and performs RSTD inter-frequency measurement on the PRSs of all measured cells within the consecutive subframe range of the measurement gap, starting from the starting point of the measurement gap. Further, the terminal determines its own location according to the result of the RSTD inter-frequency measurement of each measured cell. "Calculating the starting point of the measurement gap according to the gap offset in the gap configuration information" may be performed by using the formula indicating the correspondence between the starting point of the measurement gap and the gap offset gapOffset in step 101d.

In this embodiment, the gap offset is determined according to the PRS information of the measured cell, and is notified to the base station of the serving cell. With the solution of determining the gap offset according to the PRS information of the measured cell, the probability that the terminal detects, within a measurement gap, the PRS of the measured cell is improved, and PRS detection performance is improved. Meanwhile, at the time of determining the gap offset according to the PRS information of the measured cell, it is ensured that the measurement gap covers the positioning occasion. In this way, it is ensured that the terminal can detect the PRS of the measured cell within the measurement gap, thereby improving the PRS detection performance greatly.

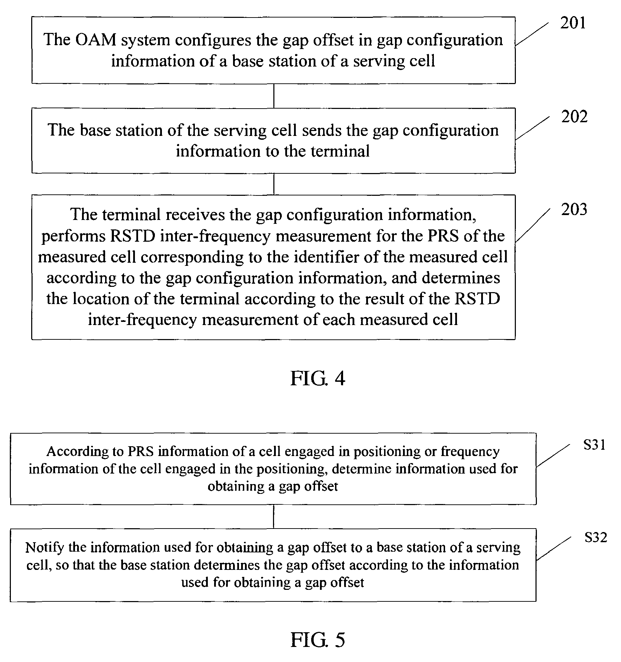

As shown in FIG 4, an embodiment of the present invention provides another measurement gap configuration method. In this method, an OAM (Operation Administration Maintenance, operation administration maintenance) system configures a gap offset of a base station. The method includes the following steps:
201. The OAM system configures the gap offset in gap configuration information of a base station of a serving cell.

Further, the OAM system configures the gap offset in the gap configuration information of the base station according to the frequency of a measured cell. The configured gap offset varies according to the frequency of the measured cell. In addition, the LTE Release 9 specifies that a terminal uses gap pattern 0 to perform RSTD inter-frequency measurement. Therefore, in this embodiment, the OAM system may configure the gap pattern in the gap configuration information as gap pattern 0.

Optionally, before step 201, this embodiment further includes the following steps:
200a. The positioning center sends positioning assistance data of RSTD inter-frequency measurement to the terminal.
   The positioning assistance data of the RSTD inter-frequency measurement includes an identifier of the measured cell and PRS information of the measured cell. When the frequency of the measured cell is different from the frequency of the serving cell, the positioning assistance data further includes the frequency of the measured cell. The PRS information includes I-PRS and n-PRS. For example, the value of n-PRS may be 1, 2, 4, or 6.
200b. The OAM system determines the gap offset according to the PRS information of the measured cell.

For the process of determining the gap offset according to the PRS information of the measured cell, reference can be made to steps 101a-101d, and details are not repeated herein. Further, the gap offset varies according to the frequency of the measured cell.

Optionally, after step 201, this embodiment further includes the following steps:
202. The base station of the serving cell sends the gap configuration information to the terminal.
   When the frequency of the measured cell differs, the base station receives a request sent by the terminal, where the request is for obtaining the gap configuration information and carries the frequency of the measured cell. The base station sends, to the terminal, the requested gap configuration information corresponding to the frequency of the measured cell.
203. The terminal receives the gap configuration information, performs RSTD inter-frequency measurement on the PRS of the measured cell corresponding to the identifier of the measured cell according to the gap configuration information, and determines the location of the terminal according to the result of the RSTD inter-frequency measurement of each measured cell.

For this step, reference can be made to step 104, and details are not repeated herein.

In this embodiment, the gap offset is determined according to the PRS information of the measured cell, so that the probability that the terminal detects, within a measurement gap, the PRS of the measured cell is improved, and PRS detection performance is improved. Meanwhile, at the time of determining the gap offset according to the PRS information of the measured cell, it is ensured that the measurement gap covers the positioning occasion. In this way, it is ensured that the terminal can detect the PRS of the measured cell within the measurement gap, thereby improving the PRS detection performance greatly.

In addition, the base station uses the gap offset configured by the OAM system, so that an extra signaling notification is not needed, and signaling overhead and positioning delay are reduced. Meanwhile, compared with the pre-agreed gap offset used by the base station, the gap offset in this embodiment can be configured flexibly by the OAM.

As shown in FIG 5, an embodiment of the present invention provides another measurement gap configuration method. The configuration method is executed by a terminal or a positioning center, and includes the following steps:
S31. According to PRS information of a cell engaged in positioning or frequency information of the cell engaged in the positioning, determine information used for obtaining a gap offset.
S32. Notify the information used for obtaining a gap offset to a base station of a serving cell, so that the base station determines the gap offset according to the information used for obtaining a gap offset.

In this embodiment, the information used for obtaining a gap offset is determined according to the PRS information of the cell engaged in the positioning, and is notified to the base station of the serving cell, so that the base station determines the gap offset according to the information used for obtaining a gap offset. In this solution, the gap offset is configured according to the PRS of the cell engaged in the positioning, so that the probability that the terminal detects, within a measurement gap, the PRS of the cell engaged in the positioning is improved, and PRS detection performance is improved. In addition, compared with the configuration method of notifying the gap offset to the base station of the serving cell, this method reduces a requirement on the computing capability of the terminal.

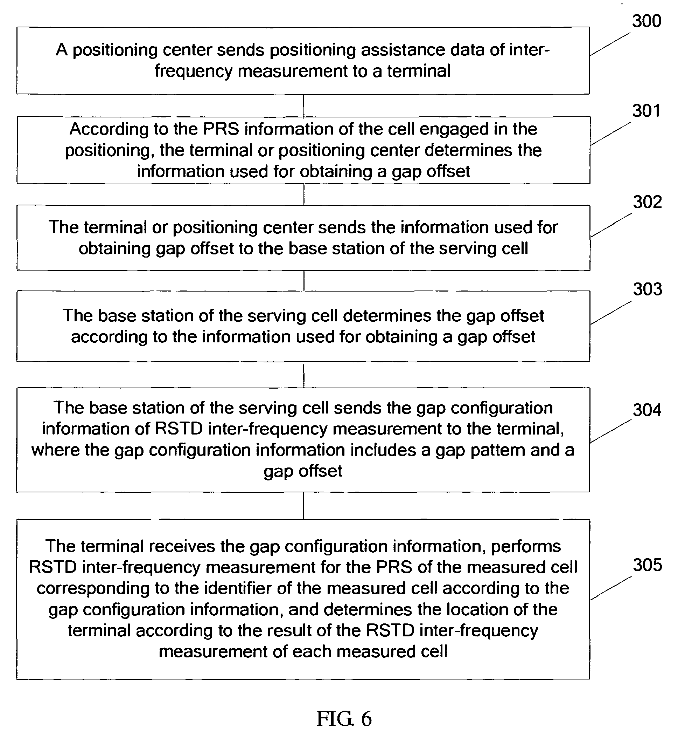

As shown in FIG. 6, an embodiment of the present invention provides another measurement gap configuration method. In this method, information used for obtaining a gap offset is determined according to the PRS information of the cell engaged in the positioning. The method includes the following steps:
300. A positioning center sends positioning assistance data of inter-frequency measurement to a terminal.
   The positioning assistance data of the inter-frequency measurement includes an identifier of a measured cell and PRS information of the measured cell. When the frequency of the measured cell is different from the frequency of the serving cell, the positioning assistance data further includes the frequency of the measured cell. The PRS information includes I-PRS and n-PRS. For example, the value of n-PRS may be 1, 2, 4, or 6.
301. According to the PRS information of the cell engaged in the positioning, the terminal or positioning center determines the information used for obtaining a gap offset.

The information used for obtaining a gap offset includes a starting point of a positioning occasion and a length of the positioning occasion.

Or, the information used for obtaining a gap offset includes the PRS information of all cells engaged in the positioning, where all cells include an intra-frequency cell and an inter-frequency cell.

Or, the information used for obtaining a gap offset includes the PRS information of the inter-frequency cell engaged in positioning.

The PRS information includes I-PRS (index of positioning reference signal) and n-PRS (length of positioning occasion), and the value of n-PRS may be 1, 2, 4, or 6.

When the information used for obtaining a gap offset includes the starting point of the positioning occasion and the length of the positioning occasion, this step may include the following steps:
301a. Determine a PRS period and a PRS offset that are corresponding to the I-PRS according to the 3GPP TS 36.211 standard.
Step 301a is the same as step 101a, and is not repeated herein.
301b. Determine the starting point of the positioning occasion (occasion) according to the PRS period and the PRS offset, and use the starting point of the positioning occasion and the length n-PRS of the positioning occasion as the information used for obtaining a gap offset.

The determining the starting point of the positioning occasion in step 301b is the same as the detailed implementation process of step 101b, and details are not repeated herein.

302. The terminal or positioning center sends the information used for obtaining a gap offset to the base station of the serving cell.

When the base station of the serving cell receives the information used for obtaining a gap offset sent by the terminal or positioning center, the base station of the serving cell determines that the terminal needs to perform RSTD inter-frequency measurement. Alternatively, in this embodiment, a notification may be used to indicate that the terminal needs to perform RSTD inter-frequency measurement. In this case, the gap offset and the notification may be sent to the base station concurrently. After the base station of the serving cell receives the information used for obtaining a gap offset sent by the terminal or positioning center, this embodiment further includes the following steps:
303. The base station of the serving cell determines the gap offset according to the information used for obtaining a gap offset.
   (1) When the information used for obtaining a gap offset includes the PRS information of all cells engaged in the positioning, or includes the PRS information of the inter-frequency cell engaged in the positioning, the starting point of the positioning occasion and the length of the positioning occasion are determined first according to the PRS information of the inter-frequency cell engaged in the positioning by using the method in steps 301a and 301b, and then the gap offset is determined by using the method in the step 303a and step 303b.
   (2) When the information used for obtaining a gap offset includes the starting point of the positioning occasion and the length of the positioning occasion, this step specifically includes the following steps:
      303a. Determine the starting point of the measurement gap according to the starting point of the positioning occasion, the length of the positioning occasion n-PRS, and a preset number of consecutive subframes in the measurement gap.
      Step 303a is the same as step 101c, and the specific process is not repeated herein.
      303b. The base station may determine the gap offset according to the starting point of the measurement gap.
      Step 303b is the same as step 101d, and the specific process is not repeated herein.
304. The base station of the serving cell sends the gap configuration information of RSTD inter-frequency measurement to the terminal, where the gap configuration information includes a gap pattern and a gap offset.
   For this step, reference can be made to step 103, and details are not repeated herein.
305. The terminal receives the gap configuration information, performs RSTD inter-frequency measurement on the PRS of the measured cell corresponding to the identifier of the measured cell according to the gap configuration information, and determines the location of the terminal according to the result of the RSTD inter-frequency measurement of each measured cell.

This step is a conventional technical means in the OTDOA positioning technology, and its implementation process is described herein briefly: The terminal calculates the starting point of the measurement gap according to the gap offset in the gap configuration information, and performs inter-frequency measurement on the positioning reference signals of all measured cells within the consecutive subframes range of the measurement gap, starting from the starting point of the measurement gap. Further, the terminal determines its own location according to the result of the inter-frequency measurement of each cell. "Calculating the starting point of the measurement gap according to the gap offset in the gap configuration information" may be performed specifically by using the formula indicating the correspondence between the starting point of the measurement gap and the gap offset gapOffset in step 101d.

In this embodiment, the information used for obtaining a gap offset is determined according to the PRS information of the cell engaged in the positioning, and is notified to the base station of the serving cell, so that the base station calculates the gap offset according to the information used for obtaining a gap offset. In this solution, the gap offset is configured according to the PRS of the cell engaged in the positioning, so that the probability that the terminal detects, within a measurement gap, the PRS of the cell engaged in the positioning is improved, and PRS detection performance is improved. Meanwhile, at the time of calculating the gap offset according to the information used for obtaining a gap offset, it is ensured that the measurement gap covers the positioning occasion. In this way, it is ensured that the terminal can detect the PRS of the cell engaged in the positioning within the measurement gap, thereby improving the PRS detection performance greatly.

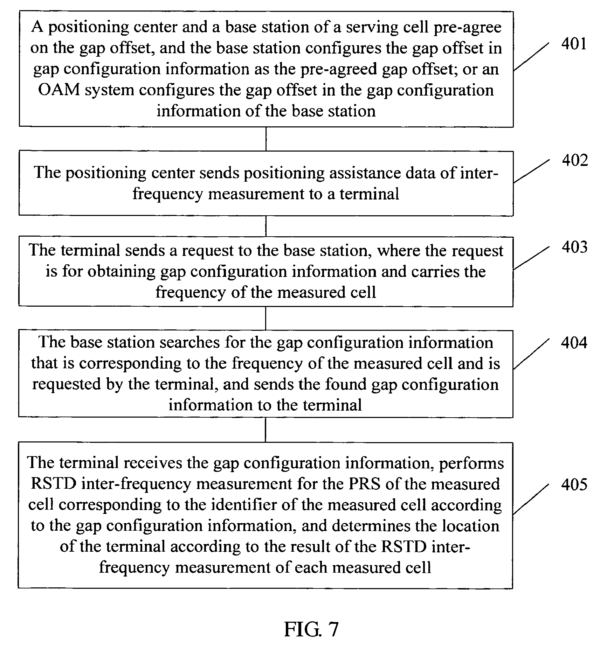

As shown in FIG 7, an embodiment of the present invention provides another measurement gap configuration method. In this method, information used for obtaining a gap offset is determined according to frequency information of a cell engaged in positioning. The method includes the following steps:
401. A positioning center and a base station of a serving cell pre-agree on the gap offset. The base station configures the gap offset in gap configuration information as the pre-agreed gap offset; or, an OAM system configures the gap offset in the gap configuration information of the base station.
   The gap offset varies according to the frequency of the measured cell.
402. The positioning center sends positioning assistance data of inter-frequency measurement to a terminal.
   The positioning assistance data of the inter-frequency measurement includes an identifier of the measured cell and PRS information of the measured cell. When the frequency of the measured cell is different from the frequency of the serving cell, the positioning assistance data further includes the frequency of the measured cell. The PRS information includes I-PRS and n-PRS. For example, the value of n-PRS may be 1, 2, 4, or 6.
403. The terminal sends a request to the base station, where the request is for obtaining gap configuration information and carries the frequency of the measured cell.
404. The base station searches for the gap configuration information that is corresponding to the frequency of the measured cell and is requested by the terminal, and sends the found gap configuration information to the terminal.
405. The terminal receives the gap configuration information, performs RSTD inter-frequency measurement on the PRS of the measured cell corresponding to the identifier of the measured cell according to the gap configuration information, and determines the location of the terminal according to the result of the RSTD inter-frequency measurement of each measured cell.

With the configuration method provided in this embodiment, the base station can configure correct gap configuration information for the terminal when the terminal measures inter-frequency cells.

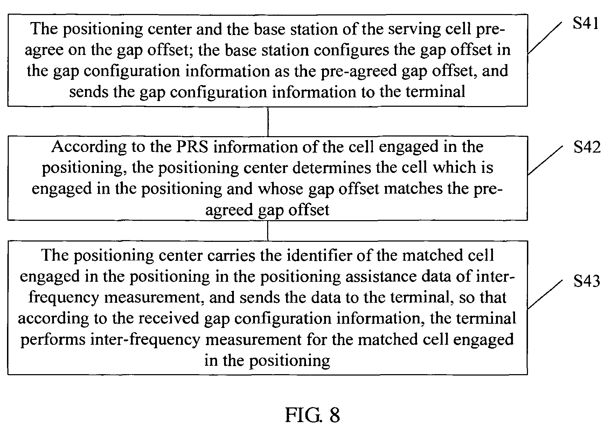

As shown in FIG 8, an embodiment of the present invention provides another measurement gap configuration method. The method includes the following steps:
S41. The positioning center and the base station of the serving cell pre-agree on the gap offset. The base station configures the gap offset in the gap configuration information as the pre-agreed gap offset, and sends the gap configuration information to the terminal.
S42. According to the PRS information of the cell engaged in the positioning, the positioning center determines the cell which is engaged in the positioning and whose gap offset matches the pre-agreed gap offset.
S43. The positioning center carries the identifier of the matched cell engaged in the positioning in the positioning assistance data of inter-frequency measurement, and sends the data to the terminal, so that according to the received gap configuration information, the terminal performs inter-frequency measurement for the matched cell engaged in the positioning.

In this embodiment, the positioning center determines the cell which is engaged in the positioning and whose gap offset matches the gap offset pre-agreed by the positioning center and the base station. The positioning center carries the identifier of the matched cell engaged in the positioning in the positioning assistance data of inter-frequency measurement, and sends the positioning assistance data to the terminal, so that according to the pre-agreed gap offset, the terminal performs inter-frequency measurement for the matched cell engaged in the positioning. In this solution, the matched cell engaged in the positioning are determined according to the PRS of the cell engaged in the positioning, so that the probability that the terminal detects, within the measurement gap, the PRS of the cell engaged in the positioning is improved, and PRS detection performance is improved.

In addition, the base station uses the pre-agreed gap offset, so that an extra signaling notification is not needed, and signaling overhead and positioning delay are reduced.

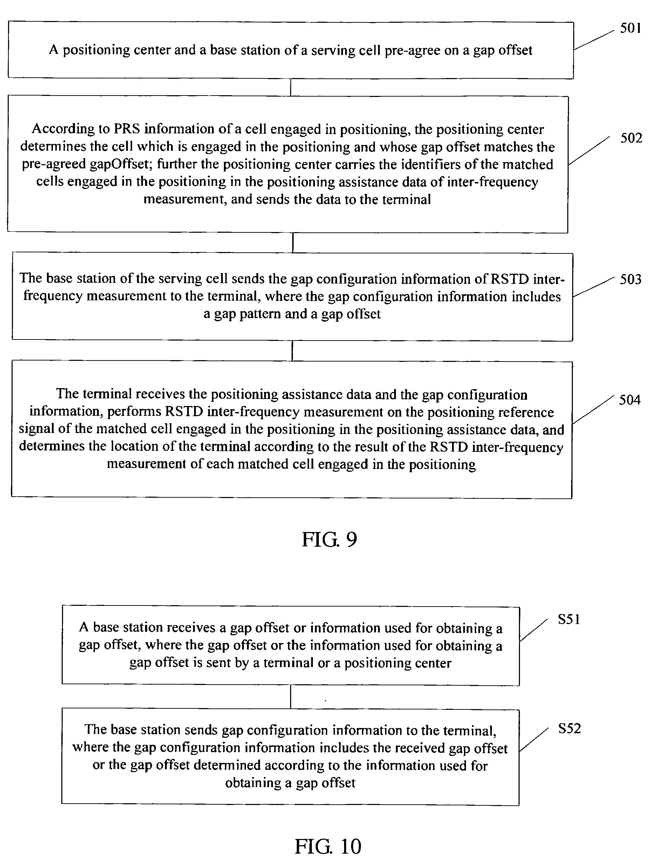

As shown in FIG. 9, an embodiment of the present invention provides another measurement gap configuration method. The method includes the following steps:
501. A positioning center and a base station of a serving cell pre-agree on a gap offset gapOffset.
502. According to PRS information of a cell engaged in positioning, the positioning center determines the cell which is engaged in the positioning and whose gap offset matches the pre-agreed gapOffset. Further, the positioning center carries the identifier of the matched cell engaged in the positioning in the positioning assistance data of inter-frequency measurement, and sends the data to the terminal.
   The positioning assistance data of inter-frequency measurement further includes the identifiers of all cells engaged in the positioning and the PRS information. The PRS information includes I-PRS and n-PRS. For example, the value of n-PRS may be 1, 2, 4, or 6. The determining, by the positioning center, the matched cell engaged in the positioning includes:
   502a, 502b, 502c, and 502d, which are the same as steps 101a, 101b, 101c, and 101d and are not detailed herein;
   502e. The positioning center uses the cell, whose gap offset matches the pre-agreed gap offset, among the cells engaged in the positioning, as the matched cell engaged in the positioning.
503. The base station of the serving cell sends the gap configuration information of RSTD inter-frequency measurement to the terminal. The gap configuration information includes a gap pattern and a gap offset.
   For this step, reference can be made to step 103, and details are not repeated herein.
504. The terminal receives the positioning assistance data and the gap configuration information, performs, according to the gap configuration information, RSTD inter-frequency measurement on the positioning reference signals of the matched cells engaged in the positioning in the positioning assistance data, and determines the location of the terminal according to the result of the RSTD inter-frequency measurement of each matched cell engaged in the positioning.

In this embodiment, the positioning center determines the cell which is engaged in the positioning and whose gap offset matches the gap offset pre-agreed by the positioning center and the base station. The positioning center carries the identifier of the matched cell engaged in the positioning in the positioning assistance data of inter-frequency measurement, and sends the data to the terminal, so that according to the pre-agreed gap offset, the terminal performs inter-frequency measurement for the matched cell engaged in the positioning. In this solution, the matched cell engaged in the positioning are determined according to the PRS of the cell engaged in the positioning, so that the probability that the terminal detects, within a measurement gap, the PRS of the cell engaged in the positioning is improved, and PRS detection performance is improved. At the time of determining the matched cell engaged in the positioning, it is ensured that the measurement gap can cover a positioning occasion. In this way, it is ensured that the terminal can detect, within the measurement gap, the PRS of the cell engaged in the positioning, thereby improving the PRS detection performance greatly.

In addition, the base station uses the pre-agreed gap offset, so that an extra signaling notification is not needed, and signaling overhead and positioning delay are reduced.

As shown in FIG. 10, an embodiment of the present invention provides another measurement gap configuration method. The method includes the following steps:
S51. The base station receives a gap offset or information used for obtaining a gap offset, where the gap offset or the information used for obtaining a gap offset is sent by a terminal or a positioning center.
S52. The base station sends gap configuration information to the terminal, where the gap configuration information includes the received gap offset or the gap offset determined according to the information used for obtaining a gap offset.

The gap offset or the information used for obtaining a gap offset is determined by the terminal or positioning center according to the PRS information of the cell engaged in the positioning.

If the base station receives the gap offset, the base station determines that the terminal needs to perform reference signal time difference RSTD inter-frequency measurement.

Further, when the base station receives the gap offset, the base station also receives a notification indicating that the terminal needs to perform reference signal time difference RSTD inter-frequency measurement.

In this embodiment, the method that the base station configures a measurement gap according to the gap offset or the information used for obtaining a gap offset sent by the terminal or positioning center is provided. With the solution of determining the gap offset according to the PRS information of the measured cell, the probability that the terminal detects, within a measurement gap, the PRS of the measured cell is improved, and PRS detection performance is improved.

As shown in FIG 11-a, an embodiment of the present invention provides a communication apparatus, including:
a determining unit 601, configured to determine a gap offset according to positioning reference signal PRS information of a cell engaged in positioning, or determine, according to the PRS information of the cell engaged in positioning or frequency information of the cell engaged in the positioning, information used for obtaining a gap offset; and
a notifying unit 602, configured to send the gap offset or the information used for obtaining a gap offset to a base station of a serving cell to a base station of a serving cell.

The PRS information of the cell engaged in the positioning includes an index of a positioning reference signal I-PRS of an inter-frequency cell engaged in positioning and a length of a positioning occasion n-PRS of the inter-frequency cell engaged in the positioning.

As shown in FIG. 11-b, the determining unit 601 includes:
a PRS period and offset determining subunit 601a, configured to determine a PRS period and a PRS offset that are corresponding to the I-PRS;
a positioning occasion starting point determining subunit 601b, configured to determine a starting point of a positioning occasion according to the PRS period and the PRS offset;
a measurement gap starting point determining subunit 601c, configured to determine the starting point of a measurement gap according to the starting point of the positioning occasion, the length of the positioning occasion n-PRS, and a preset number of consecutive subframes in the measurement gap; and
a gap offset determining subunit 601d, configured to determine the gap offset according to the starting point of the measurement gap.

The communication apparatus provided in this embodiment may be a terminal or a positioning center. For its detailed implementation process, reference can be made to the method embodiment above, and details are not repeated herein.

In this embodiment, with the solution of determining the gap offset according to the PRS information of a measured cell, the probability that the terminal detects, within the measurement gap, the PRS of the measured cell is improved, and PRS detection performance is improved.

As shown in FIG. 12-a, an embodiment of the present invention provides another communication apparatus, including:
a receiving unit 701, configured to receive a gap offset or information used for obtaining a gap offset, where the gap offset or the information used for obtaining a gap offset is sent by a terminal or a positioning center; and
a sending unit 702, configured to send gap configuration information to the terminal, where the gap configuration information includes the received gap offset or the gap offset determined according to the information used for obtaining a gap offset.

As shown in FIG. 12-b, the communication apparatus further includes a determining unit 703, which is configured to determine that the terminal needs to perform reference signal time difference RSTD inter-frequency measurement, when the receiving unit receives the gap offset.

Further, the receiving unit 701 is configured to receive a notification indicating that the terminal needs to perform reference signal time difference RSTD inter-frequency measurement.

The communication apparatus provided in this embodiment may be a base station. For its detailed implementation process, reference can be made to the method embodiment above, and details are not repeated herein.

In this embodiment, with the solution of determining the gap offset according to the PRS information of a measured cell, the probability that the terminal detects, within a measurement gap, the PRS of the measured cell is improved, and PRS detection performance is improved.

All or part of the contents in the technical solutions provided in the foregoing embodiments may be implemented through software programs, and the software programs are stored in a readable storage medium, such as a computer hard disk, a CD-ROM, or a floppy disk.

The above descriptions are merely exemplary embodiments of the present invention, but are not intended to limit the present invention.

## Claims

1. A measurement gap configuration method in an inter-frequency measurement for positioning, comprising:
determining (S11; 301), by the terminal, information according to positioning reference signal, PRS, information of a measured cell for which reference signal difference, RSTD measurement, is to be performed by the terminal, the determined information is information used to indicate that the terminal needs to perform the RSTD inter-frequency measurement and to be used for determining a gap offset, wherein the determined information includes a starting point of a positioning occasion and a length of the positioning occasion, or the information includes the PRS information of an inter-frequency cell engaged in positioning, wherein the PRS information of the measured cell includes an index of positioning reference signal and a length of positioning occasion; sending (S12; 302), by a terminal, the determined information to a base station of a serving cell; and
obtaining, by receiving (304), by the terminal, gap configuration information sent by the base station, wherein the gap configuration information comprises the gap offset and a gap pattern.

2. The method according to claim 1, further comprising:
receiving (300), by the terminal, positioning assistance data of the inter-frequency measurement from a positioning center, the positioning assistance data include an identifier of a measured cell and the PRS information of the measured cell and the frequency of the measured cell.

3. A terminal in an inter-frequency measurement for positioning, **characterized by** comprising:
a determining unit (601), configured to determine information according to positioning reference signal, PRS, information of a measured cell for which reference signal difference, RSTD measurement, is to be performed by the terminal, the determined information is information used to indicate that the terminal needs to perform the RSTD inter-frequency measurement and to be used for determining a gap offset, wherein the information includes a starting point of a positioning occasion and a length of the positioning occasion, or the information includes the PRS information of an inter-frequency cell engaged in positioning wherein the PRS information of the measured cell includes an index of positioning reference signal and a length of positioning occasion; a notifying unit (602), configured to send the information determined by the determining unit (601) to a base station of a serving cell;
wherein the terminal is configured to obtain, by receiving, gap configuration information sent by the base station, wherein the gap configuration information comprises the gap offset and a gap pattern.

4. The terminal according to claim 3 wherein the terminal is further configured to receive positioning assistance data of the inter-frequency measurement from a positioning center, positioning assistance data include an identifier of a measured cell and the PRS information of the measured cell and frequency of the measured cell.

## Patentansprüche

1. Messabstandskonfigurationsverfahren in einer Interfrequenz-Messung zur Ortung, das Folgendes umfasst:
Bestimmen (S11; 301) durch das Endgerät von Informationen gemäß Ortungsreferenzsignal-Informationen, PRS-Informationen, einer gemessenen Zelle, für die Referenzsignaldifferenz-Messung, RSTD-Messung, durch das Endgerät ausgeführt werden soll, wobei die bestimmten Informationen Informationen sind, die verwendet werden, um anzugeben, dass das Endgerät die RSDT-Interfrequenz-Messung ausführen muss, und die zum Bestimmen eines Abstandsversatzes verwendet werden sollen, wobei die bestimmten Informationen einen Startpunkt einer Ortungsgelegenheit und eine Länge der Ortungsgelegenheit enthalten, oder die Informationen die PRS-Informationen einer Interfrequenz-Zelle, die an der Ortung beteiligt ist, enthalten, wobei die PRS-Informationen der gemessenen Zelle einen Index des Ortungsreferenzsignals und eine Länge der Ortungsgelegenheit enthalten; Senden (S12; 302) durch ein Endgerät der bestimmten Informationen zu einer Basisstation einer versorgenden Zelle; und
Erhalten durch Empfangen (304) durch das Endgerät von Abstandskonfigurationsinformationen, die durch die Basisstation gesendet werden, wobei die Abstandskonfigurationsinformationen den Abstandsversatz und ein Abstandsmuster enthalten.

2. Verfahren nach Anspruch 1, das ferner Folgendes umfasst:
Empfangen (300) durch das Endgerät von Ortungsunterstützungsdaten der Interfrequenz-Messung von einem Ortungszentrum, wobei die Ortungsunterstützungsdaten eine Kennung einer gemessenen Zelle und die PRS-Informationen der gemessenen Zelle und die Frequenz der gemessenen Zelle enthalten.

3. Endgerät in einer Interfrequenz-Messung zur Ortung, **dadurch gekennzeichnet, dass** es Folgendes umfasst:
eine Bestimmungseinheit (601), die konfiguriert ist, Informationen gemäß Ortungsreferenzsignal-Informationen, PRS-Informationen, einer gemessenen Zelle, für die Referenzsignaldifferenz-Messung, RSTD-Messung, durch das Endgerät ausgeführt werden soll, zu bestimmen, wobei die bestimmten Informationen Informationen sind, die verwendet werden, um anzugeben, dass das Endgerät die RSTD-Interfrequenz-Messung ausführen muss, und die zum Bestimmen eines Abstandsversatzes verwendet werden sollen, wobei die Informationen einen Startpunkt einer Ortungsgelegenheit und eine Länge der Ortungsgelegenheit enthalten oder die Informationen die PRS-Informationen einer Interfrequenz-Zelle, die an der Ortung beteiligt ist, enthalten, wobei die PRS-Informationen der gemessenen Zelle einen Index des Ortungsreferenzsignals und eine Länge der Ortungsgelegenheit enthalten; eine Meldungseinheit (602), die konfiguriert ist, die durch die Bestimmungseinheit (601) bestimmten Informationen zu einer Basisstation einer versorgenden Zelle zu senden;
wobei das Endgerät konfiguriert ist, durch Empfangen Abstandskonfigurationsinformationen zu erhalten, die durch die Basisstation gesendet werden, wobei die Abstandskonfigurationsinformationen den Abstandsversatz und ein Abstandsmuster umfassen.

4. Endgerät nach Anspruch 3, wobei das Endgerät ferner konfiguriert ist, Ortungsunterstützungsdaten der Interfrequenz-Messung von einem Ortungszentrum zu empfangen, wobei Ortungsunterstützungsdaten eine Kennung einer gemessenen Zelle und die PRS-Informationen der gemessenen Zelle und Frequenz der gemessenen Zelle enthalten.

## Revendications

1. Procédé de configuration d'intervalle de mesure dans une mesure inter-fréquences en vue d'un positionnement, comprenant :
la détermination (S11 ; 301), par le terminal, d'une information conformément à une information de signal de référence de positionnement, PRS, d'une cellule mesurée pour laquelle une mesure de différence de signal de référence, RSTD, doit être exécutée par le terminal, l'information déterminée étant une information utilisée pour indiquer que le terminal doit exécuter la mesure inter-fréquences RSTD et à utiliser pour déterminer un décalage d'intervalle, dans lequel l'information déterminée comporte un point de départ d'une occasion de positionnement et une longueur de l'occasion de positionnement, ou l'information comporte l'information PRS d'une cellule inter-fréquences impliquée dans le positionnement, dans lequel l'information PRS de la cellule mesurée comporte un indice de signal de référence de positionnement et une longueur d'occasion de positionnement ;
l'envoi (S12 ; 302), par un terminal, de l'information déterminée à une station de base d'une cellule de desserte ; et
l'obtention, par réception (304), par le terminal, d'une information de configuration d'intervalle envoyée par la station de base, l'information de configuration d'intervalle comprenant le décalage d'intervalle et une configuration d'intervalle.

2. Procédé selon la revendication 1, comprenant en outre :
la réception (300), par le terminal, de donnée d'assistance au positionnement de la mesure inter-fréquences à partir d'un centre de positionnement, les données d'assistance au positionnement comportant un identifiant d'une cellule mesurée, les informations PRS de la cellule mesurée et la fréquence de la cellule mesurée.

3. Terminal dans une mesure inter-fréquences en vue d'un positionnement, **caractérisé en ce qu'**il comprend :
une unité de détermination (601), configurée pour déterminer une information conformément à une information de signal de référence de positionnement, PRS, d'une cellule mesurée pour laquelle une mesure de différence de signal de référence, RSTD, doit être exécutée par le terminal, l'information déterminée étant une information utilisée pour indiquer que le terminal doit exécuter la mesure inter-fréquences RSTD et à utiliser pour déterminer un décalage d'intervalle, dans lequel l'information comporte un point de départ d'une occasion de positionnement et une longueur de l'occasion de positionnement, ou l'information comporte l'information PRS d'une cellule inter-fréquences impliquée dans le positionnement, dans lequel l'information PRS de la cellule mesurée comporte un indice de signal de référence de positionnement et une longueur d'occasion de positionnement ; une unité de notification (602), configurée pour envoyer l'information déterminée par l'unité de détermination (601) à une station de base d'une cellule de desserte ; et
dans lequel le terminal est configuré pour obtenir, par réception, une information de configuration d'intervalle envoyée par la station de base, l'information de configuration d'intervalle comprenant le décalage d'intervalle et une configuration d'intervalle.

4. Terminal selon la revendication 3, le terminal étant configuré en outre pour recevoir des données d'assistance au positionnement de la mesure inter-fréquences à partir d'un centre de positionnement, les données d'assistance au positionnement comportant un identifiant d'une cellule mesurée, les informations PRS de la cellule mesurée et la fréquence de la cellule mesurée.
